# EUROPÄISCHE PATENTSCHRIFT

(11) **EP 3 014 131 B1**
(45) Veröffentlichungstag und Bekanntmachung des Hinweises auf die Patenterteilung: **06.11.2019**
(21) Anmeldenummer: 14731598.0
(22) Anmeldetag: 17.06.2014
(51) Int. Cl.: F16B 5/02, F16B 25/10, F16B 31/02, F16B 35/00, F16B 5/06

(54) **DREHBEFESTIGER**
ROTARY FASTENER
ÉLÉMENT DE FIXATION ROTATIVE

(30) Priorität: 28.06.2013 DE 102013010908
(43) Veröffentlichungstag der Anmeldung: 04.05.2016
(73) Patentinhaber: SFS Intec Holding AG, 9435 Heerbrugg (CH)
(72) Erfinder: PALM, Erich, CH-9434 Au (CH)
(86) Internationale Anmeldenummer: PCT/EP2014/062615
(87) Internationale Veröffentlichungsnummer: WO 2014/206796

(56) Entgegenhaltungen:
- DE-A1- 19 745 296
- DE-A1-102007 000 451
- DE-B- 1 161 674
- US-A- 4 959 938
- US-A- 5 829 935

## Beschreibung

Die vorliegende Erfindung betrifft einen Drehbefestiger zur Montage eines ersten Bauelements an einem zweiten Bauelement, mit einem gewindebehafteten Schaft, und mit einem mit dem gewindebehafteten Schaft drehfest verbindbaren oder verbundenen Anschlagelement, wobei das Anschlagelement mit dem gewindebehafteten Schaft form- und/oder kraftschlüssig derart verbindbar oder verbunden ist, dass die Verbindung zwischen dem Anschlagelement und dem gewindebehafteten Schaft bei einem definierten Drehmoment lösbar ist, wobei eine Verbindungskraft durch das definierte Drehmoment begrenzt ist, und wobei das definierte Drehmoment größer als ein Drehmomentschwellenwert ist.

Zur Befestigung eines ersten Bauelements an einem zweiten Bauelement können üblicherweise Schrauben oder Nieten verwendet werden, welche das erste Bauelement und das zweite Bauelement gegeneinander festlegen und dabei optional das erste Bauelement und das zweite Bauelement mit einer Verspannungskraft zusammenpressen, sofern die Montage ordnungsgemäß erfolgt ist. Im Zusammenhang mit Schrauben ist bislang eine definierte Verspannungskraft zwischen dem ersten Bauelement und dem zweiten Bauelement durch entsprechend ausgelegte Montagemittel möglich, welche während dem Eindrehen der Schraube als Antriebsgerät dienen. Derartige, als Antriebsgerät dienende Montagemittel können beispielsweise über eine Drehmomentabschaltung, eine Tiefenanschlagabschaltung oder ähnliche technische Möglichkeiten verfügen, durch die letztlich die Verspannungskraft zwischen dem ersten Bauelement und dem zweiten Bauelement begrenzt beziehungsweise eingestellt wird. Betragsmäßig kann die Verspannungskraft einer durch die Befestigung erzeugten Verbindungskraft entsprechen.

Die DE 197 45 296 A1 beschreibt einen Drehbefestiger, bei dem eine Dämmplatte durch das Anziehen einer Fixierschraube bis zu einem Anschlag an einem Halteteil fixiert wird.

Die US 4,959,938 A beschreibt einen gattungsgemäßen Drehbefestiger.

Die vorliegende Erfindung stellt einen Drehbefestiger bereit, der eine vorgespannte Befestigung eines ersten Bauelements an einem zweiten Bauelement mit einer bestimmten Verbindungskraft, unabhängig von speziell zur Einhaltung der bestimmten Verspannungskraft eingerichteten Montagemitteln, ermöglicht.

Der vorliegenden Erfindung liegt die Aufgabe zugrunde, die Verspannungskraft zwischen dem ersten Bauelement und dem zweiten Bauelement zu reduzieren.

Diese Aufgabe wird erfindungsgemäß mit den Merkmalen des unabhängigen Anspruchs gelöst.

Vorteilhafte Ausführungsformen ergeben sich im Zusammenhang mit den abhängigen Ansprüchen.

Bei dem gattungsgemäßen Drehbefestiger ist vorgesehen, dass das Anschlagelement mit dem gewindebehafteten Schaft form- und/oder kraftschlüssig derart verbindbar oder verbunden ist, dass die Verbindung zwischen dem Anschlagelement und dem gewindebehafteten Schaft bei einem definierten Drehmoment lösbar ist, wobei die Verbindungskraft durch das definierte Drehmoment begrenzt ist, und wobei das definierte Drehmoment größer als ein Drehmomentschwellenwert ist.

Übersteigt das zum Einschrauben des Drehbefestigers angelegte Drehmoment das definierte Drehmoment, so kann sich der gewindebehaftete Schaft relativ zu dem Anschlagelement drehen, so dass letztlich die Verbindungskraft zwischen dem Anschlagelement und dem ersten Bauelement und zwischen dem Anschlagelement und dem zweiten Bauelement während und nach der Montage des Drehbefestigers ebenfalls auf einen definierten maximalen Wert beschränkt wird. Somit wird auch eine maximale Verspannungskraft zwischen dem ersten Bauelement und dem zweiten Bauelement begrenzt, da diese betragsmäßig durch die Verbindungskraft beschränkt ist. Die maximale Verspannungskraft wird insbesondere am Ende des Montageprozesses erreicht, wenn der Drehbefestiger im Wesentlichen vollständig eingeschraubt ist und das Anschlagelement an zumindest einem der Bauelemente anstößt und, aufgrund von an den Berührungsflächen der entstehenden Reibungskräfte zwischen dem Anschlagelement und dem zumindest einen Bauelement, eine das Anschlagelement relativ zu dem gewindebehafteten Schaft abbremsende Kraft erzeugt wird. Übersteigt diese abbremsende Kraft eine Haftreibungskraft, die zwischen dem Anschlagelement und dem angetriebenen gewindebehafteten Schaft besteht, so dreht sich der gewindebehaftete Schaft relativ zu dem Anschlagelement, wobei dann zwischen dem gewindebehafteten Schaft und dem Anschlagelement eine Gleitreibung besteht, die in der Regel geringer als die Haftreibung ist. Durch die relative Drehbewegung des gewindebehafteten Schafts gegenüber dem Anschlagelement kann die Verbindungskraft nur bis zu einem Maximalwert ansteigen, so dass auch die Verspannungskraft, die der Drehbefestiger zwischen dem ersten Bauteil und dem zweiten Bauteil erzeugt, auf einen Maximalwert festgelegt ist.

Um nach der ordnungsgemäßen Montage des Drehbefestigers eine minimale Verbindungskraft zwischen dem ersten Bauteil und dem zweiten Bauteil sicherzustellen, kann ein Drehmomentschwellenwert vorgegeben sein, der eine untere Grenze für das definierte Drehmoment festlegt, ab dem eine relative Drehbewegung zwischen dem gewindebehafteten Schaft und dem Anschlagelement einsetzt. Der Drehmomentschwellenwert kann beispielsweise bei der Herstellung des Drehbefestigers in Abhängigkeit von einem maximal zulässigen Anzugsmoment des gewindebehafteten Schafts ausgewählt werden, und insbesondere größer als zehn Prozent des maximal zulässigen Anzugsmoments des Gewindeschaftes sein. Vorzugsweise kann der Drehmomentschwellenwert auch größer als zwanzig oder dreißig Prozent des maximal zulässigen Anzugsmoments des Gewindeschaftes sein. Besonders bevorzugt können fünfzig oder siebzig Prozent sein. Alternativ sind auch nur fünf Prozent des maximal zulässigen Anzugsmoments des Gewindeschaftes als Drehmomentschwellenwert möglich. Auf diese Weise kann unter anderem auch ein versehentliches Lösen des Anschlagelementes von dem gewindebehafteten Schaft vor der Montage des Drehbefestigers verhindert werden. Das maximal zulässige Anzugsmoment des gewindebehafteten Schafts kann, wie bei einer Schraube, aus den Materialeigenschaften des gewindebehafteten Schafts und seinen geometrischen Abmessungen abgeleitet werden, wobei insbesondere die Schaftdicke und die Gewindeform relevant sein können. In einigen Sonderfällen kann das maximal zulässige Anzugsmoment zusätzlich oder alternativ von der Dicke des zweiten Bauteils abhängen. Dies kann insbesondere bei einer ordnungsgemäßen Verwendung des Drehbefestigers mit sehr dünnen Bauteilen und/oder sehr weichen Bauteilen vorkommen, wenn das auf das zweite Bauteil übertragene Anzugsmoment ein in dem zweiten Bauteil bereits vorhandenes oder beim Eindrehen des Drehbefestigers erzeugtes Gewinde, in das der Drehbefestiger eingreift bei einem Übersteigen des maximal zulässigen Anzugmoments nachgibt und beschädigt beziehungsweise zerstört wird.

Der Drehbefestiger ist weiterhin auch rückdrehsicher und kann insbesondere zur Befestigung eines "dicken" Bauelements an einem "dünnen" Bauelement verwendet werden. Das Anschlagelement kann als ein entlang der axialen Achse gegenüber dem gewindebehafteten Schaft bewegbarer Anschlag des Drehbefestigers aufgefasst werden. Durch die vorstehend genannte Lösbarkeit des Anschlagelementes von dem gewindebehafteten Schaft bei einem definierten Drehmoment kann eine Verlagerung der Anzugsbegrenzung vom Antriebsgerät in den Drehbefestiger erreicht werden. Das Anschlagelement ist daher erfindungsgemäß momentendefiniert mit dem gewindebehafteten Schaft verbunden. Das Anschlagelement kann als Kopf des Gewindeschafts angesehen werden, der für das Zusammenziehen und das Festhalten des ersten Bauelements und des zweiten Bauelements verantwortlich sein kann. Die Verbindungskraft des Drehbefestigers ist werkzeugunabhängig und überdrehsicher, wobei die Setzqualität vom Verarbeiter nicht beeinflusst werden kann und immer optimal ist.

Erfindungsgemäß ist vorgesehen, dass die Verbindungskraft nur zwischen dem Anschlagelement und dem zweiten Bauelement erzeugt wird, oder dass die Verbindungskraft zum Teil zwischen dem Anschlagelement und dem ersten Bauelement erzeugt und zum Teil auch zwischen dem Anschlagelement und dem zweiten Bauelement erzeugt wird. Je nachdem, wo die Verbindungskraft erzeugt wird, kann die Verspannungskraft zwischen dem ersten Bauelement und dem zweiten Bauelement beeinflusst werden. Das Erzeugen eines Teils der Verbindungskraft zwischen dem Anschlagelement und dem ersten Bauelement und eines weiteren Teils der Verbindungskraft zwischen dem Anschlagelement und dem zweiten Bauelement kann beispielsweise durch ein elastisches Anschlagelement erreicht werden, wobei dann das Anschlagelement gleichzeitig unterschiedlich stark gegen das erste Bauelement und das zweite Bauelement gepresst wird. Die Verspannungskraft kann betragsmäßig im Wesentlichen der Differenz aus der zwischen dem Anschlagelement und dem ersten Bauelement erzeugten Verbindungskraft und der zwischen dem Anschlagelement und dem zweiten Bauelement erzeugten Verbindungskraft entsprechen. Beispielsweise kann das erste Bauelement ohne Verspannungskraft an dem zweiten Bauelement befestigt werden, wenn die Verbindungskraft nur zwischen dem Anschlagelement und dem zweiten Bauelement erzeugt wird.

Nützlicherweise kann vorgesehen sein, dass das Anschlagelement auf den gewindebehafteten Schaft aufsteckbar oder aufgesteckt ist. Auf diese Weise kann eine kostengünstige Fertigung des Drehbefestigers effizient und mit gleichbleibender Qualität realisiert sein.

Vorteilhafterweise kann auch vorgesehen sein, dass das Anschlagelement auf den gewindebehafteten Schaft aufspritzbar oder aufgespritzt ist. Auch auf diese Weise kann eine effiziente und kostengünstige Herstellung des Drehbefestigers mit gleichbleibender Qualität sichergestellt werden. Durch das Aufspritzen des Anschlagelements an dem gewindebehafteten Schaft kann auch auf ein späteres Zusammenführen des Anschlagelements mit dem gewindebehafteten Schaft verzichtet werden, so dass die Fertigung des Drehbefestigers insgesamt weiter vereinfacht werden kann. Weiterhin kann durch das Aufspritzen auch das definierte Drehmoment durch zusätzliche Adhäsionskräfte zwischen dem gewindebehafteten Schaft und dem aufgespritzten Anschlagelement in einfacher Weise kontrolliert erhöht werden.

Weiterhin kann vorgesehen sein, dass das Anschlagelement mit dem gewindebehafteten Schaft in einem Bereich eines gewindebehafteten Schaftabschnitts verbindbar oder verbunden ist. Auf diese Weise kann eine zusätzliche Erhöhung des definierten Drehmoments im Zusammenhang mit dem Drehbefestiger realisiert sein, insbesondere wenn das Anschlagelement während der Montage des Drehbefestigers, ausgehend von dem gewindefreien Schaftabschnitt des gewindebehafteten Schafts in einen gewindebehafteten Bereich des gewindebehafteten Schafts übertritt.

Es kann auch vorgesehen sein, dass das Anschlagelement mutterartig auf den gewindebehafteten Schaft aufschraubbar oder aufgeschraubt ist. Auf diese Weise ist eine effiziente und kostengünstige Möglichkeit zum Zusammenfügen des Drehbefestigers mit gleichbleibender Qualität, insbesondere der Einhaltung des definierten Drehmoments, gegeben. Insbesondere kann auch vorgesehen sein, dass der gewindebehaftete Schaft durch Drehen um eine axiale Achse relativ zu dem Anschlagelement parallel zu der axialen Achse und relativ zu dem Anschlagelement frei bewegbar ist. Auf diese Weise kann zusätzlich sichergestellt werden, dass die Verbindungskraft auch bei unsachgemäßer Handhabung des Drehbefestigers durch das definierte Drehmoment beschränkt bleibt. Insbesondere kann auf diese Weise sichergestellt sein, dass sich das Anschlagelement von dem gewindebehafteten Schaft löst, ohne dass die Verbindungskraft in unzulässiger Weise ansteigen kann. Der gewindebehaftete Schaft kann nicht gegenüber dem Anschlagelement entlang der axialen Achse anschlagen.

Erfindungsgemäß ist es vorgesehen, dass an dem gewindebehafteten Schaft ein axialer Anschlag angeordnet ist, der eine axiale Bewegung des gewindebehafteten Schafts relativ zu dem Anschlagelement bei ordnungsgemäßer Montage nicht begrenzt, wobei die Verbindungskraft unabhängig von dem axialen Anschlag erzeugbar ist. Auf diese Weise kann die bisherige werkzeugunabhängige optimale Setzqualität bei einem als einfache Schraube ausgeführten gewindebehafteten Schaft erreicht werden. Ein derartiger Drehbefestiger umfasst dementsprechend neben dem üblicherweise während der ordnungsgemäßen Montage als Kopf des gewindebehafteten Schafts verwendeten Anschlagelement noch den eigentlichen Schraubenkopf in Form des axialen Anschlags des gewindebehafteten Schafts, welcher während der Montage in der Regel lediglich zur Übertragung von Drehmoment von einem Montagemittel auf den gewindebehafteten Schaft des Drehbefestigers genutzt wird. Bei ordnungsgemäßer Montage des Drehbefestigers ist die Verbindungskraft dementsprechend nicht durch den Anschlag erzeugt, da dieser die mögliche axiale Bewegung des gewindebehafteten Schafts in montiertem Zustand noch nicht beschränkt.

Erfindungsgemäß ist es vorgesehen, dass das Anschlagelement einen Auswerfer umfasst, der ein zur Drehmomentübertragung auf den gewindebehafteten Schaft vorgesehenes Montagemittel bei axialer Annäherung des axialen Anschlags an das Anschlagelement mechanisch von dem gewindebehafteten Schaft trennt. Mit Hilfe des Auswerfers kann mechanisch eine fehlerhafte Montage des Drehbefestigers unabhängig von dem verwendeten Montagemittel erreicht werden. Der Auswerfer ersetzt insofern einen an dem Montagemittel eventuell nötigen Tiefenanschlag, welcher eine Erzeugung einer erhöhten Verbindungskraft in der axialen Richtung durch den Anschlag verhindert.

Vorteilhafterweise kann vorgesehen sein, dass das Anschlagelement eine Dichtwirkung an Berührungsflächen zu dem ersten Bauelement und/oder dem zweiten Bauelement bereitstellt. Aufgrund der bereitgestellten Dichtwirkung können zusätzliche nachträgliche Maßnahmen zur Abdichtung der durch den Drehbefestiger hergestellten Verbindung im Bereich des ersten Bauelements und des zweiten Bauelements wegfallen. Die insgesamt vorzusehenden Bestandteile der Verbindung zwischen dem ersten Bauelement und dem zweiten Bauelement können daher auf den Drehbefestiger selbst beschränkt werden, so dass auch der Aufbau einer dichtenden Verbindung zwischen dem ersten Bauelement und dem zweiten Bauelement auf einfache Weise realisierbar ist.

Darüber hinaus kann vorgesehen sein, dass der gewindebehaftete Schaft einen ersten Gewindeabschnitt und einen zweiten Gewindeabschnitt umfasst. Durch das Vorsehen zweier voneinander getrennter/unterscheidbarer Gewindeabschnitte auf den gewindebehafteten Schaft entsteht ein zusätzlicher Freiheitsgrad, der einen flexibleren Einsatz des Drehbefestigers ermöglicht. Beispielsweise kann durch zwei voneinander unabhängige Gewindeabschnitte eine Beschränkung der Eindrehtiefe des gewindebehafteten Schafts realisiert werden, wobei der Drehbefestiger im Übrigen weiterhin überdrehsicher ist und eine optimale werkzeugunabhängige Setzqualität garantiert.

Es kann auch vorgesehen sein, dass der erste Gewindeabschnitt und der zweite Gewindeabschnitt unterschiedliche Ganghöhen aufweisen. Durch unterschiedliche Ganghöhen der beiden Gewindeabschnitte können unterschiedliche Verbindungskräfte während verschiedener Phasen der Montage des Drehbefestigers realisiert werden. Es können auch unterschiedliche Eindrehgeschwindigkeiten/Senkgeschwindigkeiten des Drehbefestigers während verschiedener Phasen der Montage des Drehbefestigers realisiert werden.

Nützlicherweise kann auch vorgesehen sein, dass der erste Gewindeabschnitt und der zweite Gewindeabschnitt durch einen gewindefreien Schaftabschnitt voneinander getrennt sind.

Das Verfahren, welches zur vorgespannten Befestigung des ersten Bauelements an dem zweiten Bauelement mit einer bestimmten Verbindungskraft mit Hilfe des Drehbefestigers verwendet werden kann, kann insbesondere als abschließenden Verfahrensschritt ein Beenden des Eindrehens des Drehbefestigers umfassen, bevor ein an dem gewindebehafteten Schaft angeordneter Anschlag mit dem Anschlagelement und/oder dem ersten Bauelement und/oder dem zweiten Bauelement in Kontakt tritt beziehungsweise ein Beenden des Eindrehens des Drehbefestigers umfassen, nachdem eine Relativdrehung zwischen dem gewindebehafteten Schaft und dem Anschlagelement während des Eindrehens des Drehbefestigers erstmalig erfolgt. Im Übrigen kann das Verfahren das Zusammenführen des ersten Bauelements und des zweiten Bauelements sowie das Positionieren und Eindrehen des Drehbefestigers als Verfahrensschritte umfassen.

Die Erfindung wird nun mit Bezug auf die begleitenden Zeichnungen anhand besonders bevorzugter Ausführungsformen beispielhaft erläutert.

Es zeigen:
- Figuren 1 bis 4: eine erste Ausführungsform eines Drehbefestigers während verschiedener Montagephasen;
- Figuren 5 bis 8: eine zweite Ausführungsform eines Drehbefestigers während verschiedener Montagephasen;
- Figuren 9 bis 11: eine dritte Ausführungsform eines Drehbefestigers während verschiedener Montagephasen;
- Figuren 12 und 13: eine vierte Ausführungsform eines Drehbefestigers während verschiedener Montagephasen;
- Figuren 14 und 15: eine fünfte Ausführungsform eines Drehbefestigers während verschiedener Montagephasen;
- Figur 16: eine sechste Ausführungsform eines Drehbefestigers;
- Fig. 17: eine siebte Ausführungsform eines Drehbefestigers;
- Figuren 18 bis 21: eine achte Ausführungsform eines Drehbefestigers in verschiedenen Montagephasen; und
- Figuren 22 bis 25: eine neunte Ausführungsform eines Drehbefestigers in verschiedenen Montagephasen.

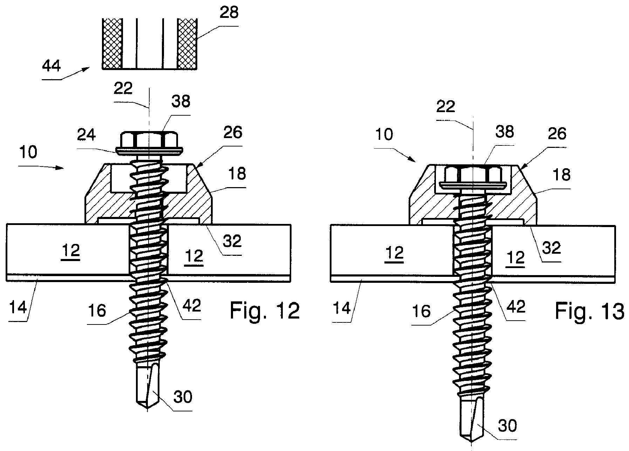

Nur die Ausführungsformen der Figuren 12-15 sind erfindungsgemäße Ausführungsformen.

Gleiche Bezugszeichen bezeichnen in verschiedenen Figuren gleiche oder gleichartige Teile.

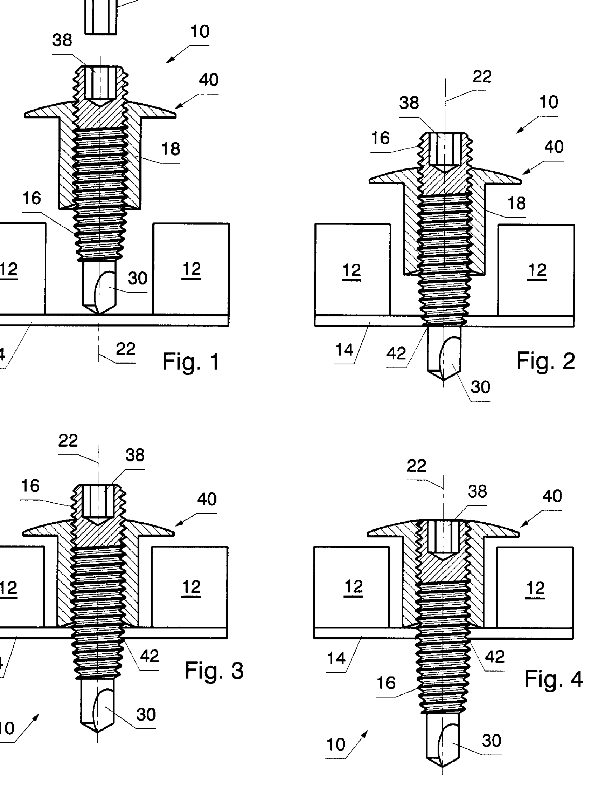

Die Figuren 1 bis 4 zeigen eine erste Ausführungsform eines Drehbefestigers in verschiedenen Montagephasen. In Figur 1 ist eine erste Ausführungsform eines Drehbefestigers 10 dargestellt, die ein erstes Bauelement 12 an einem zweiten Bauelement 14 mit einer bestimmten, durch den Drehbefestiger vorgegebenen Verspannungskraft vorgespannt befestigt. Das erste Bauelement 12 kann, wie in Figur 1 dargestellt, vorgelocht sein. Das zweite Bauelement 14 kann, wie in Figur 1 dargestellt, nicht vorgelocht sein. Das erste Bauelement 12 kann in Richtung einer axialen Achse 22 "dick" verglichen mit dem zweiten Bauelement 14 sein. Der in den Figuren 1 bis 4 dargestellte Drehbefestiger 10 umfasst einen gewindebehafteten Schaft 16 und ein Anschlagelement 18. An einem Ende des gewindebehafteten Schafts 16 kann eine Bohrspitze 30 angeordnet sein. An dem der Bohrspitze 30 abgewandten Ende des gewindebehafteten Schafts 16 kann ein Antriebselement 38 angeordnet sein, über welches der Drehbefestiger 10 beziehungsweise der gewindebehaftete Schaft 16 in Rotation um die axiale Achse 22 versetzt werden kann. Das Antriebselement 38 kann beispielsweise ein Innensechskant oder eine andere geeignete mechanische Kupplungsstelle zur Einleitung/Übertragung von Drehmoment sein. Wie in Figur 1 dargestellt ist, kann ein Montagemittel 28 entlang der axialen Achse 22 an das Antriebselement 38 herangeführt und angekoppelt werden, um ein zum Eindrehen des Drehbefestigers 10 notwendiges Drehmoment auf den Drehbefestiger 10 zu übertragen. Zugleich ist die Übertragung einer geringen Kraft parallel zur axialen Achse 22 möglich, bis ein gewindebehafteter Bereich des gewindebehafteten Schafts 16 in das zweite Bauelement 14 eingreift und durch das Gewinde die Bewegung des Drehbefestigers 10 entlang der axialen Achse 22 ausschließlich aufgrund des übertragenen Drehmoments erfolgen kann. Die Bohrspitze 30 kann eine Perforation des in Figur 1 nicht vorgelocht dargestellten zweiten Bauelements 14 erzeugen, so dass der Drehbefestiger 10 als Bohrschraube aufgefasst werden kann.

Das Anschlagelement 18 haftet an dem gewindebehafteten Schaft 16, so dass eine Drehung des Drehbefestigers 10 zur gleichmäßigen Rotation des Anschlagelements 18 zusammen mit dem gewindebehafteten Schaft 16 aufgrund der zwischen diesen beiden Teilen des Drehbefestigers 10 bestehenden Haftreibung führt. Ausgehend von Figur 1 führt somit das Drehen des Drehbefestigers 10 in Eindrehrichtung über Figur 2 zu dem in Figur 3 dargestellten Montagezustand, bei dem das Anschlagelement 18 schließlich an einer Berührungsfläche 32 zwischen dem ersten Bauelement 12 und dem Anschlagelement 18 aufliegt. Das Anschlagelement 18 kann zu diesem Zweck einen eigens vorgesehenen Bremsring 40 umfassen, der ein Bremsmoment erzeugt, das dem zum Eindrehen des Drehbefestigers 10 verwendeten/übertragenen Drehmoment entgegenwirkt. Das an der Berührungsfläche 32 erzeugte Bremsmoment entspricht betragsmäßig dem Produkt aus einem Radius des Bremsrings und der zwischen dem Anschlagelement 18 und dem ersten Bauelement 12 wirkenden Reibkraft, die durch eine Verbindungskraft zwischen dem Anschlagelement 18 und dem ersten Bauelement 12 definiert ist. Diese Anpresskraft ist das Gegenstück zu der in einem Ankerbereich 42 erzeugten Kraft. Das dem zum Eindrehen des Drehbefestigers verwendete/übertragene Drehmoment entgegenwirkende Bremsmoment ist eine Funktion dieser Verbindungskraft.

Sobald der Kontakt zwischen dem Anschlagelement 18 und dem ersten Bauelement 12 hergestellt ist, lässt ein weiteres Eindrehen des Drehbefestigers 10 das an dem Anschlagelement 18 wirkende Bremsmoment rapide ansteigen, so dass letztlich eine Drehmomentdifferenz zwischen dem gewindebehafteten Schaft 16, an dem das Drehmoment zum Eindrehen des Drehbefestigers 10 angreift, und dem Anschlagelement 18, an dem das Bremsmoment angreift, entsteht. Diese Drehmomentdifferenz führt schließlich bei einem definierten Drehmoment zum Einsetzen einer Relativdrehung zwischen dem Anschlagelement 18, dessen Drehbewegung um die axiale Achse 22 stoppt, und dem gewindebehafteten Schaft 16, dessen Drehbewegung aufgrund des eingeleiteten/übertragenen Drehmoments unabhängig von dem Anschlagelement 18 fortgesetzt wird. Dies führt zu einer Bewegung des gewindebehafteten Schafts 16 relativ zu den übrigen in Figur 3 und 4 dargestellten Teilen des Drehbefestigers 10, insbesondere dem gewindebehafteten Schaft 16, und dem ersten Bauelement 12 und dem zweiten Bauelement 14. Neben der in Figur 3 und 4 explizit bezeichneten Berührungsfläche 32 kann auch eine weitere nicht explizit gekennzeichnete Berührungsfläche zwischen dem Anschlagelement 18 und dem zweiten Bauelement 14 bestehen/entstehen. Diese weitere Berührungsfläche kann ebenfalls oder alternativ zu der Berührungsfläche 32 ein weiteres oder alternatives Bremsmoment erzeugen, welches ebenfalls oder alternativ auf das Anschlagelement 18 wirkt.

In Abhängigkeit von der Abmessung des Anschlagelements 18 entlang der axialen Achse 22 im Verhältnis zu dem ersten Bauelement 12 kann das Bremsmoment dementsprechend an der Berührungsfläche 32 zwischen dem ersten Bauelement 12 und dem Anschlagelement 18 und/oder an der weiteren Berührungsfläche zwischen dem zweiten Bauelement 14 und dem Anschlagelement 18 erzeugt werden. In Abhängigkeit von dem Ort, an dem das Bremsmoment erzeugt wird, wird auch die Verspannungskraft zwischen dem ersten Bauelement 12 und dem zweiten Bauelement 14 variiert. Beispielsweise kann die Verspannungskraft zwischen dem ersten Bauelement 12 und dem zweiten Bauelement 14 auch Null sein oder gegen Null tendieren, sofern das gesamte auf das Anschlagelement 18 wirkende Bremsmoment an der weiteren Berührungsfläche zwischen dem Anschlagelement 18 und dem zweiten Bauelement 14 in der Nähe des Ankerbereichs 42 erzeugt wird. Das erste Bauteil 12 ist in diesem speziellen Fall ohne Verspannungskraft entlang der axialen Achse 22 durch den Drehbefestiger 10 gegenüber dem zweiten Bauteil 14 festgelegt.

Das Anschlagelement 18 kann beispielsweise aus Gummi beziehungsweise Kunststoff im weitesten Sinne oder einem metallischen Werkstoff gefertigt sein. Eine entsprechende Elastizität des Anschlagelements 18 vorausgesetzt, kann, sofern das erste Bauelement 12 im Bereich der Berührungsfläche 32 entsprechend geformt ist, eine Dichtwirkung zwischen dem Anschlagelement 18 und dem ersten Bauelement 22 bereitgestellt werden, so dass keine zusätzlichen Dichtmittel zur Abdichtung vorgesehen werden müssen.

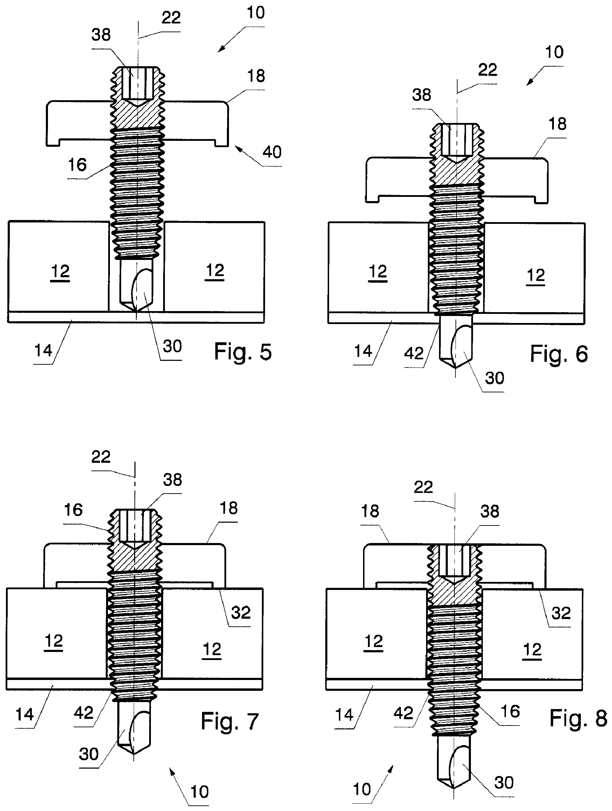

Die Figuren 5 bis 8 zeigen eine zweite Ausführungsform eines Drehbefestigers in verschiedenen Montagephasen. Der in den Figuren 5 bis 8 dargestellte Drehbefestiger 10 unterscheidet sich insbesondere durch eine andere Ausgestaltung des Anschlagelements 18 von der aus den Figuren 1 bis 4 bekannten ersten Ausführungsform. Bei der in den Figuren 5 bis 8 dargestellten zweiten Ausführungsform entspricht das Anschlagelement 18 im Wesentlichen einer Scheibe. Wie aus den Figuren 5 bis 8 ersichtlich ist, liegt das Anschlagelement 18 im montierten Zustand des Drehbefestigers im Wesentlichen flach auf dem ersten Bauelement 12 auf und reicht nicht bis zu dem Ankerbereich 42 in dem zweiten Bauelement 14 herab. Bei der zweiten Ausführungsform wird somit das erste Bauelement 12 immer mit der Verspannungskraft gegen das zweite Bauelement 14 gedrückt.

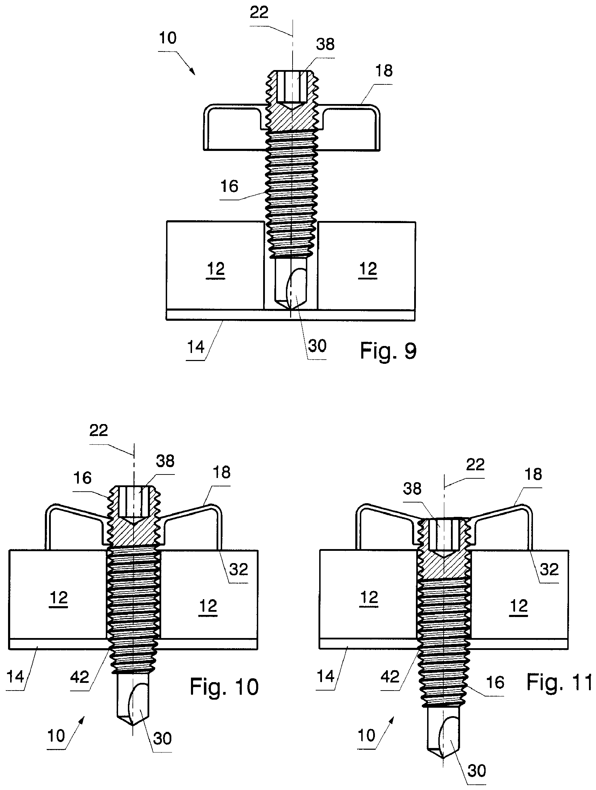

Die Figuren 9 bis 11 zeigen eine dritte Ausführungsform eines Drehbefestigers in verschiedenen Montagephasen. Die in den Figuren 9 bis 11 dargestellte dritte Ausführungsform des Drehbefestigers 10 umfasst ein gegenüber der aus den Figuren 5 bis 8 bekannten zweiten Ausführungsform nochmals modifiziertes Anschlagelement 18. Das in den Figuren 9 bis 11 dargestellte Anschlagelement 18 ist hutartig ausgebildet, wobei eine plastische und/oder elastische Deformierbarkeit des Anschlagelementes 18 während der Montage gegeben sein kann. Die hutartige Ausgestaltung des Anschlagelements 18 stellt eine äußerst materialsparende Ausgestaltung für das Anschlagelement 18 dar, wobei trotz des geringen Materialbedarfs im Bereich der Berührungsfläche 32 entfernt von der axialen Achse 22 ein großes Bremsmoment erzeugt werden kann.

Die Figuren 12 und 13 zeigen eine vierte Ausführungsform eines Drehbefestigers in verschiedenen Montagephasen. Der in den Figuren 12 und 13 dargestellte Drehbefestiger 10 umfasst als gewindebehafteten Schaft 16 eine einfache Bohrschraube, die insbesondere über einen als axialen Anschlag 24 ausgeführten Sechskantkopf verfügt, welcher zugleich als Antriebselement 38 ausgeführt ist. Das Antriebselement 38 kann, wie in Figur 12 angedeutet, dementsprechend mit Hilfe eines als Nuss ausgeführten Montagemittels 28 mit einem Drehmoment beaufschlagt werden. Bei dem in den Figuren 12 und 13 dargestellten Drehbefestiger 10 umfasst das Anschlagelement 18 einen Auswerfer 26, der im Wesentlichen als eine Vorwölbung des Anschlagelements 18 entlang der axialen Achse 22 ausgebildet ist und eine Vertiefung zur Aufnahme des Antriebselements 38 bereitstellt. Dementsprechend wird das beispielhaft als Nuss ausgeführte Montagemittel 28 mechanisch von dem Antriebselement 38 des gewindebehafteten Schafts 16 getrennt, sobald der gewindebehaftete Schaft 16 relativ zu dem Anschlagelement 18 entlang der axialen Achse 22 in die durch den Auswerfer 26 bereitgestellte Vertiefung eingedreht wird. Ein Mantel 44 des als Nuss ausgeführten Montagemittels 28 stößt dabei mechanisch gegen den Auswerfer 26, so dass das Antriebselement 38 letztlich von dem Montagemittel 28 getrennt wird, da das Montagemittel 28 entlang der axialen Achse 22 nicht nachgeführt werden kann. Der Auswerfer 26 kann insbesondere so bemessen sein, dass die Trennung des Montagemittels 28 von dem Antriebselement 38 erfolgt, bevor der Anschlag 24 das Anschlagelement 18 berührt.

Alternativ zu der in den Figuren 12 und 13 dargestellten Ausführung des Antriebselements 38 als Sechskantkopf können selbstverständlich andere alternative Antriebselemente vorgesehen sein.

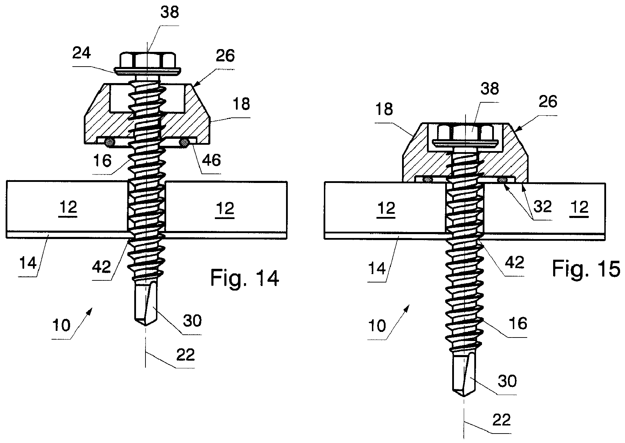

Die Figuren 14 und 15 zeigen eine fünfte Ausführungsform eines Drehbefestigers in verschiedenen Befestigungsphasen. Die in den Figuren 14 und 15 dargestellte fünfte Ausführungsform unterscheidet sich von der in den Figuren 12 und 13 dargestellten vierten Ausführungsform insbesondere durch eine Dichtung 46, die in dem Bereich zwischen dem Anschlagelement 18 und dem zweiten Bauelement 12 vorgesehen sein kann. Die Dichtung 46 kann, wie in Figur 15 ersichtlich, im montierten Zustand des Drehbefestigers 10 eine zusätzliche Berührungsfläche 32 bereitstellen, welche neben einer Dichtwirkung zwischen dem Anschlagelement 18 und dem ersten Bauelement 12 auch ein zusätzliches Bremsmoment bereitstellt.

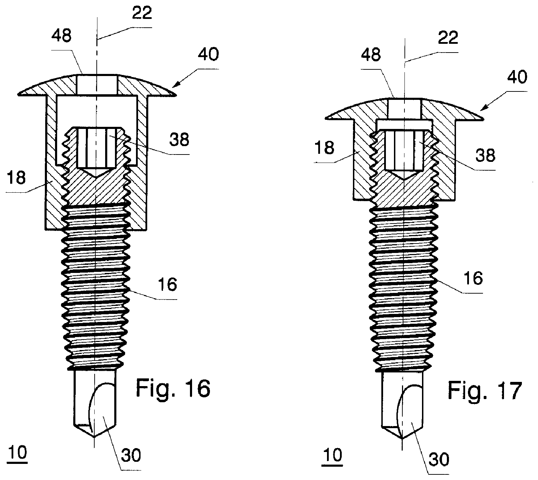

Die Figuren 16 und 17 zeigen eine sechste beziehungsweise eine siebte Ausführungsform eines Drehbefestigers. Die in den Figuren 16 und 17 dargestellte sechste beziehungsweise siebte Ausführungsform umfasst jeweils eine Öffnung 48 in dem Anschlagelement 18, hinter der das Antriebselement 38 des gewindebehafteten Schafts 16 versenkt sein kann. Der gewindebehaftete Schaft 16 kann insbesondere durch die Öffnung 48 entlang der axialen Achse 22 mutterartig auf das Anschlagelement 18 aufgeschraubt werden.

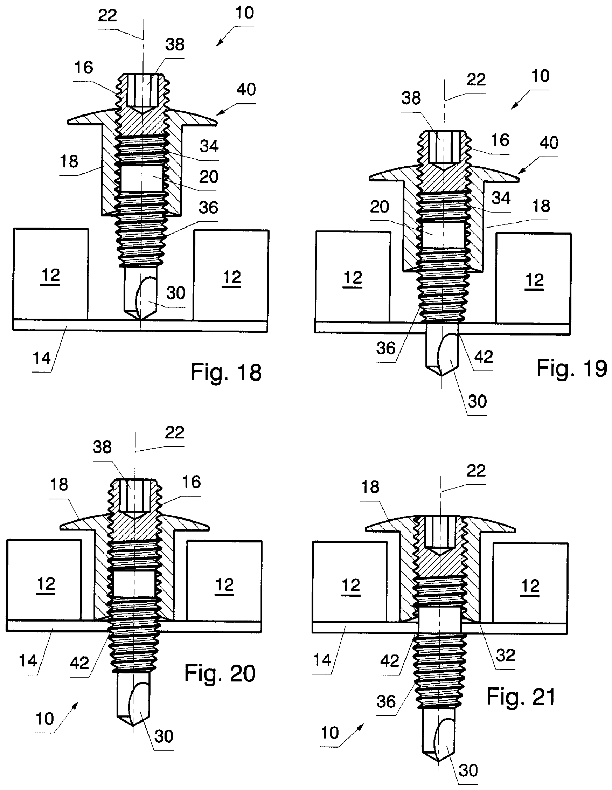

Die Figuren 18 bis 21 zeigen eine achte Ausführungsform eines Drehbefestigers in verschiedenen Befestigungsphasen. Im Unterschied zu der aus den Figuren 1 bis 4 bekannten ersten Ausführungsform ist bei der achten Ausführungsform der gewindebehaftete Schaft 16 untergliedert in einen ersten Gewindeabschnitt 34, einen zweiten Gewindeabschnitt 36 und einen zwischen dem ersten Gewindeabschnitt 34 und dem zweiten Gewindeabschnitt 36 angeordneten gewindefreien Schaftabschnitt 20. Diese besondere Konstruktion erlaubt insbesondere eine Modifikation der Verbindungskraft in verschiedenen Befestigungsphasen, sowie eine Festlegung einer beschränkten Einschraubtiefe des Drehbefestigers 10. Sobald der zweite Gewindeabschnitt 36 nämlich vollständig durch den Ankerbereich 42 hindurchgedreht ist, wie dies in Figur 21 dargestellt wird, tritt der gewindefreie Schaftabschnitt 20 in den Ankerbereich 42 ein, so dass die Verbindungskraft zwischen dem ersten Bauelement 12 und dem zweiten Bauelement 14 spontan reduziert wird. Dementsprechend beginnt sich das Anschlagelement 18 erneut gemeinsam mit dem gewindebehafteten Schaft 16 zu drehen, so dass ein weiteres Eindrehen des Drehbefestigers 10 relativ zu dem ersten Bauelement 12 und dem zweiten Bauelement 14 verhindert werden kann. Die während der Montage des Drehbefestigers 10 zwischen dem ersten Bauelement 12 und dem zweiten Bauelement 14 auftretende Verspannungskraft kann nach wie vor durch das definierte Drehmoment begrenzt sein, und nach dem vollständigen Durchtritt des zweiten Gewindeabschnitts 36 durch den Ankerbereich 42 gegenüber diesem deutlich reduziert sein.

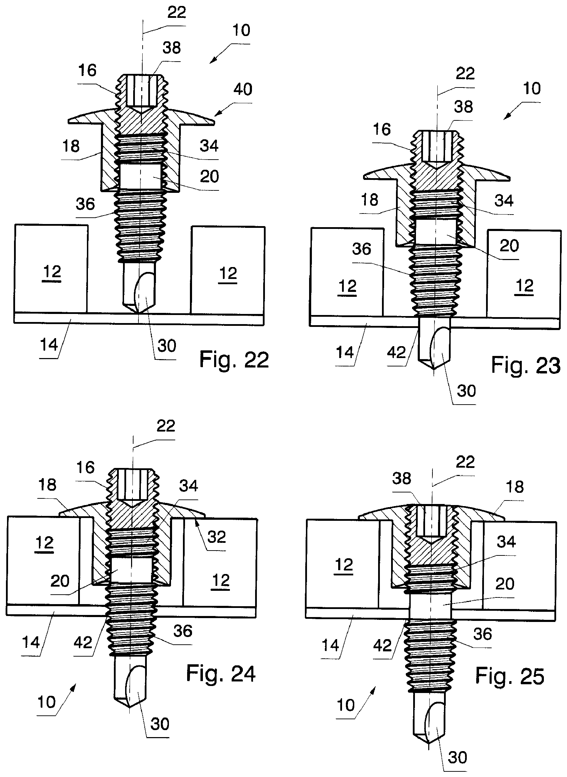

Die Figuren 22 bis 25 zeigen eine neunte Ausführungsform eines Drehbefestigers in verschiedenen Befestigungsphasen. Im Unterschied zu der aus den Figuren 18 bis 21 bekannten achten Ausführungsform ragt bei der neunten Ausführungsform der zweite Gewindeabschnitt 36 bereits vor der Montage vollständig aus dem Anschlagelement 18 heraus. Dementsprechend ist bei der neunten Ausführungsform das definierte Drehmoment nicht durch den zweiten Gewindeabschnitt 36 definiert. Der erste Gewindeabschnitt 34 und der zweite Gewindeabschnitt 36 können unterschiedliche Ganghöhen aufweisen, so dass während verschiedener Montagephasen bei gleicher Drehgeschwindigkeit des Drehbefestigers 10 unterschiedliche Einschraubgeschwindigkeiten/Senkgeschwindigkeiten entlang der axialen Achse 22 realisierbar sind. Insbesondere kann das Hindurchtreten durch das zweite Bauelement 14 durch die Ganghöhe des zweiten Gewindeabschnitts 36 festgelegt werden, während die anschließende Relativbewegung entlang der axialen Achse 22 des gewindebehafteten Schafts 16 relativ zu dem Anschlagelement 18 durch die Ganghöhe des ersten Gewindeabschnitts 34 bestimmbar ist, wobei aufgrund der unterschiedlichen Ganghöhen zugleich eine Variation des definierten Drehmoments erzielt werden kann.

### Bezugszeichenliste

- 10: Drehbefestiger
- 12: erstes Bauelement
- 14: zweites Bauelement
- 16: gewindebehafteter Schaft
- 18: Anschlagelement
- 20: gewindefreier Schaftabschnitt
- 22: axiale Achse
- 24: axialer Anschlag
- 26: Auswerfer
- 28: Montagemittel
- 30: Bohrspitze
- 32: Berührungsfläche
- 34: erster Gewindeabschnitt
- 36: zweiter Gewindeabschnitt
- 38: Antriebselement
- 40: Bremsring
- 42: Ankerbereich
- 44: Mantel
- 46: Dichtung
- 48: Öffnung

## Patentansprüche

1. Drehbefestiger (10) zur Montage eines ersten Bauelements (12) an einem zweiten Bauelement (14), mit einem gewindebehafteten Schaft (16), an dessen einem Ende eine Bohrspitze (30) und am anderen Ende ein Antriebselement (38) angeordnet ist,
mit einem mit dem gewindebehafteten Schaft (16) drehfest verbindbaren oder verbundenen Anschlagelement (18),
wobei der montierte Drehbefestiger (10) derart ausgelegt ist, eine Verbindungskraft zwischen dem Anschlagelement (18) und dem ersten Bauelement (12) und/oder zwischen dem Anschlagelement und dem zweiten Bauelement (14) zu erzeugen, wobei das Anschlagelement (18) mit dem gewindebehafteten Schaft (16) form- und/oder kraftschlüssig derart verbindbar oder verbunden ist, dass die Verbindung zwischen dem Anschlagelement (18) und dem gewindebehafteten Schaft (16) bei einem definierten Drehmoment lösbar ist, wobei die Verbindungskraft durch das definierte Drehmoment begrenzt ist, und wobei das definierte Drehmoment größer als ein Drehmomentschwellenwert ist,
wobei an dem gewindebehafteten Schaft (16) ein axialer Anschlag (24) angeordnet ist, der eine axiale Bewegung des gewindebehafteten Schafts (16) relativ zu dem Anschlagelement (18) bei ordnungsgemäßer Montage nicht begrenzt, wobei die Verbindungskraft unabhängig von dem axialen Anschlag (24) erzeugbar ist, und
das Anschlagelement (18) einen Auswerfer (26) umfasst, der im Wesentlichen als eine Vorwölbung des Anschlagelements (18) entlang der axialen Achse (22) ausgebildet ist und eine Vertiefung zur Aufnahme des Antriebselements (38) bereitstellt, dergestalt, dass ein zur Drehmomentübertragung auf den gewindebehafteten Schaft (16) vorgesehenes Montagemittel (28) bei axialer Annäherung des axialen Anschlags (24) an das Anschlagelement (18) mechanisch von dem gewindebehafteten Schaft (16) getrennt wird.

2. Drehbefestiger (10) nach Anspruch 1, **dadurch gekennzeichnet, dass** das Anschlagelement (18) auf den gewindebehafteten Schaft (16) aufsteckbar oder aufgesteckt ist.

3. Drehbefestiger (10) nach Anspruch 1 oder 2, **dadurch gekennzeichnet, dass** das Anschlagelement (18) auf den gewindebehafteten Schaft (16) aufspritzbar oder aufgespritzt ist.

4. Drehbefestiger nach einem der Ansprüche 1 bis 3, **dadurch gekennzeichnet, dass** das Anschlagelement (18) mit dem gewindebehafteten Schaft (16) in einem Bereich eines gewindefreien Schaftabschnitts (20) verbindbar oder verbunden ist.

5. Drehbefestiger (10) nach Anspruch 1, **dadurch gekennzeichnet, dass** das Anschlagelement (18) mutterartig auf den gewindebehafteten Schaft (16) aufschraubbar oder aufgeschraubt ist.

6. Drehbefestiger (10) nach einem der vorhergehenden Ansprüche, **dadurch gekennzeichnet, dass** der gewindebehaftete Schaft (16) durch Drehen um eine axiale Achse (22) relativ zu dem Anschlagelement (18) parallel zu der axialen Achse (22) und relativ zu dem Anschlagelement (18) frei bewegbar ist.

7. Drehbefestiger (10) nach einem der vorhergehenden Ansprüche, **dadurch gekennzeichnet, dass** das Anschlagelement (18) eine Dichtwirkung an Berührungsflächen (32) zu dem ersten Bauelement (12) und/oder dem zweiten Bauelement (14) bereitstellt.

8. Drehbefestiger (10) nach einem der vorhergehenden Ansprüche, **dadurch gekennzeichnet, dass** der gewindebehaftete Schaft (16) einen ersten Gewindeabschnitt (34) und einen zweiten Gewindeabschnitt (36) umfasst.

9. Drehbefestiger (10) nach Anspruch 8, **dadurch gekennzeichnet, dass** der erste Gewindeabschnitt (34) und der zweite Gewindeabschnitt (36) unterschiedliche Ganghöhen aufweisen.

10. Drehbefestiger (10) nach Anspruch 8 oder 9, **dadurch gekennzeichnet, dass** der erste Gewindeabschnitt (34) und der zweite Gewindeabschnitt (36) durch einen gewindefreien Schaftabschnitt (20) voneinander getrennt sind.

## Claims

1. A rotational fastener (10) for mounting a first constructional element (12) on a second constructional element (14), comprising a threaded shaft (16) with a bore point (30) arranged on one end and a drive element (38) on the other end,
comprising a stop element (18) that is connectable or connected to the threaded shaft (16) in a rotation-proof manner,
wherein the mounted rotational fastener (10) is designed to produce a connecting force between the stop element (18) and the first constructional element (12) and/or between the stop element and the second constructional element (14),
wherein the stop element (18) with the threaded shaft (16) is connectable or connected in a positively and/or frictionally locked manner so that the connection between the stop element (18) and the threaded shaft (16) can be released in the event of a defined torque,
wherein the connecting force is limited by the defined torque, and wherein the defined torque is greater than a torque threshold value,
wherein an axial stop (24) is arranged on the threaded shaft (16), which axial stop does not limit an axial movement of the threaded shaft (16) in relation to the stop element (18) when mounted correctly, wherein the connecting force can be produced independently of the axial stop (24), and the stop element (18) comprises an ejector (26), which is essentially configured as a bulge of the stop element (18) along the axial axis (22) and which provides a depression for receiving the drive element (38), in such a manner that a mounting means (28) provided for the transmission of torque to the threaded shaft (16) is mechanically separated from the threaded shaft (16) in the event that the axial stop (24) nears the stop element (18) axially.

2. The rotational fastener (10) according to claim 1, **characterized in that** the stop element (18) can be pushed onto or is pushed onto the threaded shaft (16) .

3. The rotational fastener (10) according to claim 1 or 2, **characterized in that** the stop element (18) can be injection-moulded onto or is injection-moulded onto the threaded shaft (16).

4. The rotational fastener (10) according to one of claims 1 to 3, **characterized in that** the stop element (18) is connectable or connected to the threaded shaft (16) in an area of a thread-free shaft section (20).

5. The rotational fastener (10) according to claim 1, **characterized in that** the stop element (18) can be screwed onto or is screwed onto the threaded shaft (16) in the manner of a nut.

6. The rotational fastener (10) according to one of the preceding claims, **characterized in that** the threaded shaft (16) can be moved freely by rotation about an axial axis (22) in relation to the stop element (18) parallel to the axial axis (22) and in relation to the stop element (18).

7. The rotational fastener (10) according to one of the preceding claims, **characterized in that** the stop element (18) provides a sealing effect on contact surfaces (32) with the first constructional element (12) and/or the second constructional element (14).

8. The rotational fastener (10) according to one of the preceding claims, **characterized in that** the threaded shaft (16) comprises a first threaded section (34) and a second threaded section (36).

9. The rotational fastener (10) according to claim 8, **characterized in that** the first threaded section (34) and the second threaded section (36) exhibit different pitches.

10. The rotational fastener (10) according to claim 8 or 9, **characterized in that** the first threaded section (34) and the second threaded section (36) are separated from each other by a thread-free shaft section (20).

## Revendications

1. Fixateur rotatif (10) pour le montage d'un premier élément de construction (12) sur un deuxième élément de construction (14), avec une tige dotée d'un filetage (16) à l'extrémité de laquelle est disposé une pointe de perçage (30) et à l'autre extrémité un élément d'entraînement (38),
avec un élément de butée (18) pouvant être ou étant relié solidaire en rotation à la tige dotée d'un filetage (16),
sachant que le fixateur rotatif (10) monté est conçu de manière à produire une force de liaison entre l'élément de butée (18) et le premier élément de construction (12) et/ou entre l'élément de butée et le deuxième élément de construction (14),
sachant que l'élément de butée (18) peut être ou est relié par conformité de forme et/ou de force à la tige dotée d'un filetage (16) de telle manière que la liaison entre l'élément de butée (18) et la tige dotée d'un filetage (16) peut être défaite à un couple défini,
sachant que la force de liaison est limitée par le couple défini et sachant que le couple défini est plus grand que la valeur seuil de couple,
sachant qu'une butée axiale (24) est disposée sur la tige dotée d'un filetage (16), qui ne limite pas un déplacement axial de la tige dotée d'un filetage (16) par rapport à l'élément de butée (18) lors du montage conforme, sachant que la force de liaison peut être produite indépendamment de la butée axial (24), et
l'élément de butée (18) comprend un éjecteur (26) qui est constitué pour l'essentiel sous la forme d'une protubérance de l'élément de butée (18) le long de l'axe axial (22) et fournit une cavité pour loger l'élément d'entraînement (38), de telle manière qu'un moyen de montage (28) prévu pour la transmission de couple à la tige dotée d'un filetage (16) est séparé mécaniquement de la tige dotée d'un filetage (16) lors de l'approche axiale de la butée axiale (24) sur l'élément de butée (18) .

2. Fixateur rotatif (10) selon la revendication 1, **caractérisé en ce que** l'élément de butée (18) peut être emboîté ou est emboîté sur la tige dotée d'un filetage (16).

3. Fixateur rotatif (10) selon la revendication 1 ou 2, **caractérisé en ce que** l'élément de butée (18) peut être ou est appliqué par projection sur la tige dotée d'un filetage (16).

4. Fixateur rotatif (10) selon l'une quelconque des revendications 1 à 3, **caractérisé en ce que** l'élément de butée (18) peut être relié ou est relié à la tige dotée d'un filetage (16) dans une zone d'une section de tige sans filetage (20).

5. Fixateur rotatif (10) selon la revendication 1, **caractérisé en ce que** l'élément de butée (18) peut être vissé ou est vissé comme un écrou sur la tige dotée d'un filetage (16).

6. Fixateur rotatif (10) selon l'une quelconque des revendications précédentes, **caractérisé en ce que** la tige dotée d'un filetage (16) peut être librement déplacée par rotation autour d'un axe axial (22) par rapport à l'élément de butée (18) parallèlement à l'axe axial (22) et par rapport à l'élément de butée (18).

7. Fixateur rotatif (10) selon l'une quelconque des revendications précédentes, **caractérisé en ce que** l'élément de butée (18) fournit un effet d'étanchéité aux surfaces de contact (32) par rapport au premier élément de construction (12) et/ou au deuxième élément de construction (14).

8. Fixateur rotatif (10) selon l'une quelconque des revendications précédentes, **caractérisé en ce que** la tige dotée d'un filetage (16) comprend une première section filetée (34) et une deuxième section filetée (36).

9. Fixateur rotatif (10) selon la revendication 8, **caractérisé en ce que** la première section filetée (34) et la deuxième section filetée (36) comportent des angles de pas différents.

10. Fixateur rotatif (10) selon la revendication 8 ou 9, **caractérisé en ce que** la première section filetée (34) et la deuxième section filetée (36) sont séparées l'une de l'autre par une section de tige sans filetage (20).
